# EUROPEAN PATENT APPLICATION

(11) **EP 1 874 008 A1**
(43) Date of publication of application: **02.01.2008**
(21) Application number: 07010699.2
(22) Date of filing: 30.05.2007
(51) Int. Cl.: H04M 1/02, H04M 1/23, H04M 1/725, G06F 1/16

(54) **Keypad battery pack, mobile terminal available for different keypad battery packs, and method of changing keypad of mobile terminal**

(30) Priority: 28.06.2006 KR 20060058861
(71) Applicant: Samsung Electronics Co., Ltd., Suwon-si, Gyeonggi-Do (KR)
(72) Inventor: Jung, Ha Ran, Suwon-si, Gyeonggi-do (KR); Choi, Do Hwan, Suwon-si, Gyeonggi-do (KR); Lee, Ki Tae, Suwon-si, Gyeonggi-do (KR); An, Jong Hyun, Suwon-si, Gyeonggi-do (KR)
(74) Representative: Boakes, Jason Carrington

(57) **Abstract**

A keypad battery pack, a mobile terminal available for different keypad battery packs, and a method for changing a keypad of a mobile terminal by replacing a battery pack with a different battery pack are provided. The mobile terminal has a keypad formed on a battery pack as well as on a front surface of the mobile terminal, thereby expanding a keypad-placement area to a rear surface of the mobile terminal. As a result, keys of the keypad are arranged on both surfaces of the mobile terminal, and thus a key arrangement space has room for an additional key, thereby enabling easy adding of a key. Further, the keypads of the mobile terminal are arranged on the rear surface and the front surface according to functions of the keypads, thereby providing a keypad structure suitable for a mobile terminal having an additional function. Further, the mobile terminal may selectively mount a plurality of battery packs having different types and arrangements of keypads.

## Description

### BACKGROUND OF THE INVENTION

### 1. Field of the Invention

The present invention relates to a mobile terminal, in particular, to a keypad battery pack, a mobile terminal available for different keypad battery packs, and a method for changing a keypad of a mobile terminal by replacing a battery pack with a different battery pack.

### 2. Description of the Related Art

Mobile terminals, for example mobile phones and Personal Digital Assistants (PDAs), have been remarkably developed and now are widely used in modern life. As use of mobile terminals becomes more common, users' demands have become more varied. Accordingly, mobile terminals have been developed to conveniently provide more functions. For example, mobile terminals are provided with various additional functions such as multimedia, wireless Internet, or digital broadcast transmitting and receiving, as well as common functions such as calling, message transmitting and receiving, or personal information management.

A mobile terminal generally has a keypad as an input means for receiving a user's input. As a mobile terminal is provided with various additional functions, a new key for performing and controlling the additional functions is added to a typical keypad. However, a mobile terminal has a limited keypad-placement area, and thus it is not easy to additionally place a new key on the limited keypad-placement area.

Meanwhile, various keypads are provided for different nations, manufacturers or product types. The types of keypads mainly include 3-x*4 keys of a typical telephone key arrangement and 5x4 keys of a QWERTY key arrangement of a keyboard. Generally, a key arrangement of a keypad is preset in a mobile terminal manufacturing process, and thus it is impossible to change the key arrangement thereafter. In other words, generally a keypad of a mobile terminal has a fixed key arrangement. Thus, if a user having a mobile terminal of a specific key arrangement (for example, 3x4 keys) wants to change to another key arrangement (for example, 5x4 keys), the user must replace the mobile terminal with a new mobile terminal having another key arrangement.

### SUMMARY OF THE INVENTION

In order to solve the above problems, the present invention expands a keypad-placement area of a mobile terminal, thereby enabling easier addition of keys.

The present invention further provides a keypad structure suitable for a mobile terminal having various additional functions.

The present invention further provides a mobile terminal and method for alternately using keypads having different key arrangements.

The present invention further provides a mobile terminal and method for replacing keypads according to purpose.

The present invention further improves convenience and satisfaction of a user of a mobile terminal.

Typically, a keypad is formed on a front surface of a mobile terminal, and a battery pack is formed on a rear surface of the mobile terminal. The present invention utilizes the rear surface of the mobile terminal, which has previously been used only as a battery pack mounting area, as a keypad-placement area.

Therefore, the present invention provides a keypad battery pack, i.e. a battery pack having a keypad thereon. The present invention further provides a mobile terminal for alternately mounting keypad battery packs of different types. The present invention further provides a method for changing a keypad of a mobile terminal by replacing a battery pack with a different battery pack.

A mobile terminal according to an exemplary embodiment of the present invention includes a terminal body having a front surface and a rear surface, a front display unit formed on the front surface, and a rear display unit and a battery mounting area formed on the rear surface; a battery pack having an inner surface contacted with the rear surface of the terminal body and an outer surface facing the same direction as the rear surface of the terminal body, and having a rear keypad formed on the outer surface, wherein the battery pack is mounted on the battery mounting area of the terminal body to be electrically connected to the terminal body.

The terminal body may further include a front keypad formed on the front surface. The terminal body may further include a charging terminal formed on the battery mounting area, and the battery pack may further include a battery terminal formed on the inner surface, wherein the charging terminal and the battery terminal are electrically connected to each other by contact.

A type of the front keypad may be different from a type of the rear keypad. At least one of the front keypad and the rear keypad may have one of a 3x4 and a 5x4 key arrangement, and may include a search key.

The terminal body may further include a first key scan control unit and a second key scan control unit electrically connected to the front keypad and the rear keypad, respectively, for recognizing a specific key input. Alternatively, the terminal body may further include a first key scan control unit and the battery pack further includes a second key scan control unit.

The charging terminal and the battery terminal may each have a serial communication terminal. A size of the front display unit may be larger than a size of the rear display unit, and the front display unit may be formed over an entire front surface of the terminal body.

A mobile terminal according to another embodiment of the present invention includes a terminal body having a front surface and a rear surface, a front display unit formed on the front surface, and a rear display unit and a battery mounting area formed on the rear surface; a first battery pack having an inner surface and an outer surface mounted on the battery mounting area of the terminal body such that the inner surface is contacted with the rear surface of the terminal body to be electrically connected to the terminal body, and having a first keypad formed on the outer surface facing the same direction as the rear surface of the terminal body; and a second battery pack having an inner surface and an outer surface, and having a second keypad formed on the outer surface that is of a different type from a type of the first keypad.

The terminal body may further include a front keypad formed on the front surface. The terminal body may further include a charging terminal formed on the battery mounting area, and each of the first and second battery packs may further include a battery terminal formed on the respective inner surfaces thereof to be electrically connected to the charging terminal.

A type of the front keypad may be different from a type of the first keypad and a type of the second keypad. The front keypad may include a search key, and one of the first keypad and the second keypad has a 3x4 key arrangement and the other has a 5*4 key arrangement. The first keypad and the second keypad may each include a search key, and one of the first keypad and the second keypad has a 3x4 key arrangement and the other has a 5x4 key arrangement.

The terminal body may further include a first key scan control unit electrically connected to the front keypad for recognizing a specific key input. The terminal body may further include a second key scan control unit electrically connected to the first keypad or to the second keypad for recognizing a specific key input. Alternatively, the first battery pack may further include a second key scan control unit electrically connected to the first keypad for recognizing a specific key input, and the second battery pack further includes a third key scan control unit electrically connected to the second keypad for recognizing a specific key input.

The charging terminal and the battery terminal may each have a serial communication terminal. A size of the front display unit may be larger than a size of the rear display unit, and the front display unit may be formed over the entire front surface of the terminal body.

According to another exemplary embodiment of the present invention, a method for changing a keypad of a mobile terminal having a terminal body having a front surface with a front display unit and a rear surface with a rear display unit and battery mounting area, a first battery pack mounted on the battery mounting area and having an outer surface with a first keypad, and a second battery pack having an outer surface with a second keypad that is of a different type from a type of the first keypad, includes removing the first battery pack from the battery mounting area; and mounting the second battery pack on the battery mounting area.

### BRIEF DESCRIPTION OF THE DRAWINGS

The objects, features, and advantages of the present invention will become more apparent from the following detailed description in conjunction with the accompanying drawings, in which:
FIG. 1A is a perspective view illustrating an example of a keypad battery pack in accordance with an exemplary embodiment of the present invention, and FIG. 1B is a perspective view illustrating another example of a keypad battery pack in accordance with an exemplary embodiment of the present invention;
FIG. 2 is a perspective view illustrating a front surface of a mobile terminal having a keypad battery pack in accordance with an exemplary embodiment of the present invention;
FIG. 3A is a perspective view illustrating a rear surface of the mobile terminal having the keypad battery pack of FIG. 2, and FIG. 3B is an exploded perspective view illustrating the rear surface of the mobile terminal having the keypad battery pack of FIG. 2;
FIG. 4A is a perspective view illustrating a front surface of a mobile terminal having a keypad battery pack in accordance with another exemplary embodiment of the present invention, and FIG. 4B is a perspective view illustrating a rear surface of the mobile terminal having the keypad battery pack of FIG. 4A;
FIG. 5 is a perspective view illustrating a method for changing a keypad of a mobile terminal by replacing a battery pack with a different battery pack in accordance with another exemplary embodiment of the present invention; and
FIG. 6 is a block diagram illustrating an internal configuration of a mobile terminal in accordance with another exemplary embodiment of the present invention

### DETAILED DESCRIPTION OF EXEMPLARY EMBODIMENTS

Exemplary embodiments of the present invention are described with reference to the accompanying drawings in detail. The same reference numbers are used throughout the drawings to refer to the same or like parts. Detailed descriptions of well-known functions and structures incorporated herein may be omitted to avoid obscuring the subject matter of the present invention.

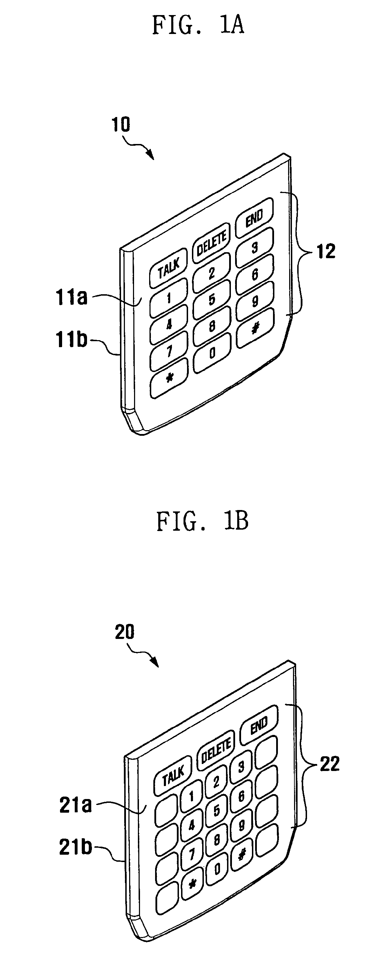

FIG. 1A is a perspective view illustrating an example of a keypad battery pack in accordance with an exemplary embodiment of the present invention, and FIG. 1B is a perspective view illustrating another example of a keypad battery pack in accordance with an exemplary embodiment of the present invention.

As shown in FIGs. 1A and 1B, the keypad battery packs 10 and 20 of the present invention are characterized in that keypads 12 and 22 are formed on typical battery packs having batteries (not shown) included therein. For example, the batteries include Lithium-ion (Li-ion) battery cells or Lithium-ion polymer battery cells. The present invention is not directly related to types or internal configurations of batteries and is not limited in this regard.

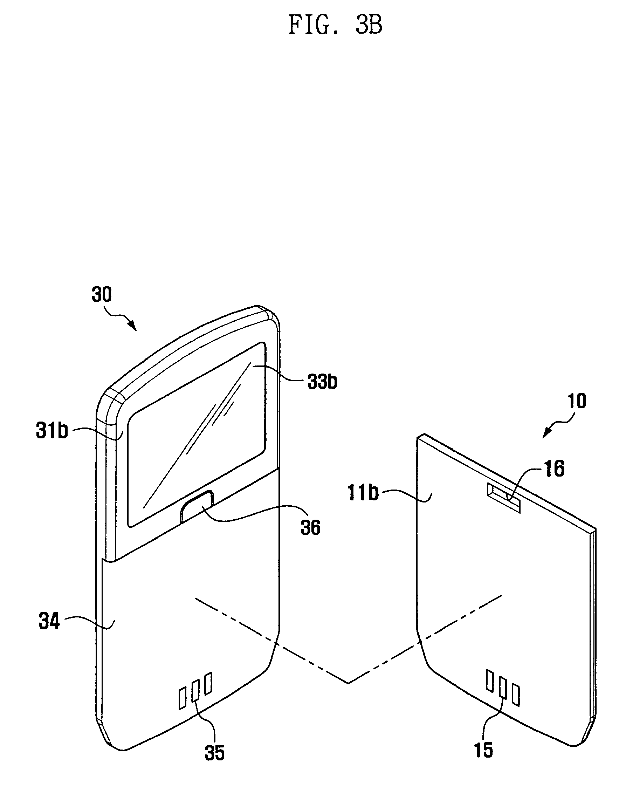

The battery packs 10 and 20 have first surfaces 11 a and 21 a and second surfaces 11 b and 21 b, respectively, and the keypads 12 and 22 are formed on the first surfaces 11 a and 12a of the battery packs 10 and 20, respectively. Although not shown in FIGs. 1A and 1 B, battery terminals 15 (shown in FIG. 3B) are positioned on the second surfaces 11 b and 21 b of the battery packs 10 and 20. When the battery packs 10 and 20 are mounted on mobile terminals, the first surfaces 11 a and 21 a become outer surfaces and the second surfaces 11 b and 21 b become inner surfaces.

The keypads 12 and 22 of the battery packs 10 and 20 may have a 3x4 key arrangement as shown in FIG. 1 a, or a 5x4 key arrangement as shown in FIG. 1 b. If required, the keypads 12 and 22 may include a search key (or a direction key). As such, the keypads 12 and 22 of the battery pack 10 and 20 may have different key arrangements and types. In other words, the present invention does not focus on specific types and arrangements of the keypads 12 and 22 of the battery packs 10 and 20. In the present invention, it is important that the keypads 12 and 22 are formed on the battery packs 10 and 20, and that various types and arrangements of the keypads 12 and 22 are applied.

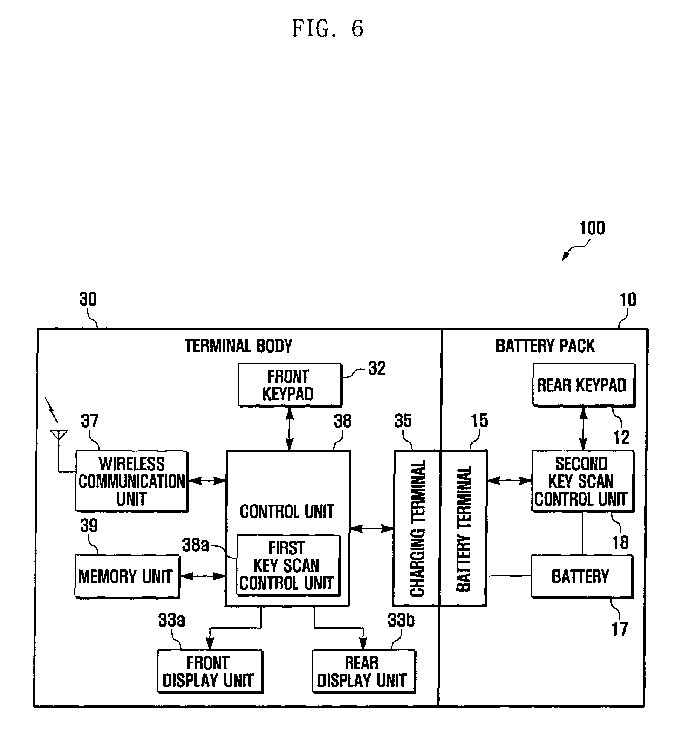

The keypad battery packs 10 and 20 of the present invention may further have a key scan control unit 18 (shown in FIG. 6). As described later, the key scan control unit 18 is electrically connected to the keypads 12 and 22 and the battery terminals 15, and recognizes a specific key input (i.e. which key is pressed) of the keypads 12 and 22.

Hereinafter, a mobile terminal having the keypad battery pack of the present invention is described in detail through exemplary embodiments.

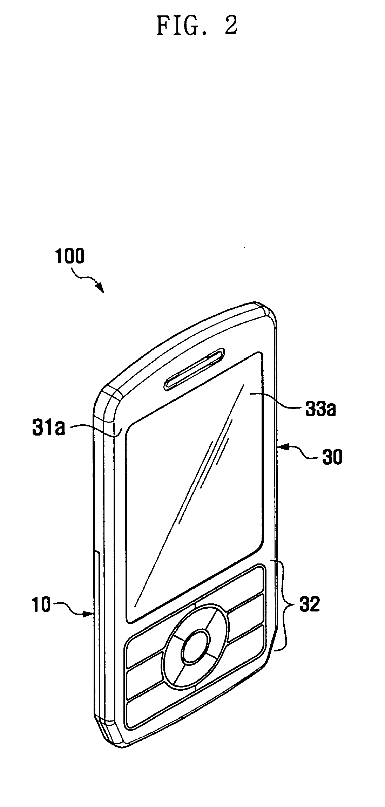

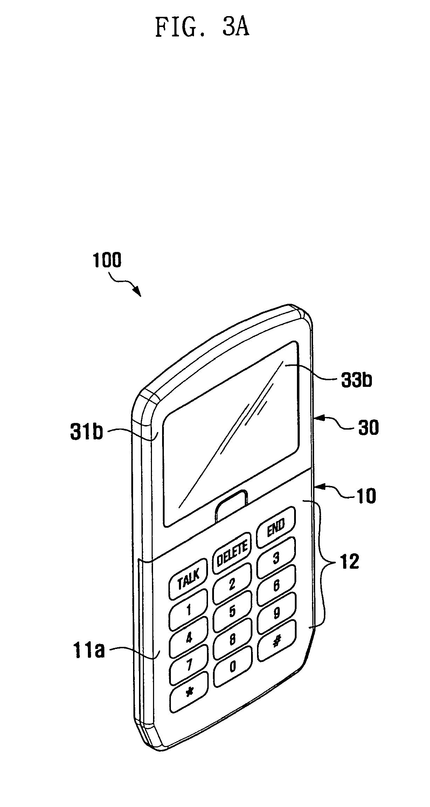

FIG. 2 is a perspective view illustrating a front surface of a mobile terminal 100 having a keypad battery pack 10 in accordance with an exemplary embodiment of the present invention. FIG. 3A is a perspective view illustrating a rear surface 31b of the mobile terminal 100 having the keypad battery pack 10 of FIG. 2, and FIG. 3B is an exploded perspective view illustrating the rear surface 31 b of the mobile terminal 100 having the keypad battery pack 10 of FIG. 2.

As shown in FIGs. 2, 3A, and 3B, the mobile terminal 100 includes a terminal body 30 and the battery pack 10. The terminal body 30 has a front surface 31 a and a rear surface 31 b, and the battery pack 10 has an outer surface 11 a and an inner surface 11 b corresponding to the first surface 11 a and the second surface 11 b, respectively, of the battery pack 10 of FIG. 1 a. The inner surface 11 b of the battery pack 10 is contacted with the rear surface 31 b of the terminal body 30, and the outer surface 11 a of the battery pack 10 faces the same direction as the rear surface 31 b of the terminal body 30.

The front surface 31 a of the terminal body 30 has a front display unit 33a and a front keypad 32, and the rear surface 31 b of the terminal body 30 has a rear display unit 33b and a battery mounting area 34. The front display unit 33a and the rear display unit 33b may include Liquid Crystal Displays (LCDs). The front display unit 33a and the rear display unit 33b may be equal to or different from each other in size and resolution of a screen. The front keypad 32 shown in FIG. 2 includes a search key and a function key. As shown in FIG. 3B, the battery pack 10 is mounted on the battery mounting area 34, and the battery mounting area 34 has a typical configuration suitable for attaching and detaching the battery pack 10. A push button 36 or another fastening means may be formed at a portion of the battery mounting area for fastening the battery pack 10.

The battery pack 10 is mounted on the battery mounting area 34 of the terminal body 30. The battery pack 10 has a rear keypad 12 formed on the outer surface 11a. The rear keypad 12 shown in Fig. 3A has a 3x4 key arrangement. As shown in FIG. 3B, the inner surface 11b of the battery pack 10 has the aforementioned battery terminal 15, and the battery mounting area 34 of the terminal body 30 has a charging terminal 35. When the battery pack 10 is mounted on the terminal body 30, the battery terminal 15 and the charging terminal 35 are electrically connected to each other by contact. The battery terminal 15 and the charging terminal 35 each have a serial communication terminal. A sill 16 may be formed at a portion of the battery pack 10 corresponding to the push button 36.

A type of the front keypad 32 formed on the front surface 31 a of the terminal body 30 is different from a type of the rear keypad 12 of the battery pack 10 mounted on the rear surface 31 b of the terminal body 30. For example, as shown in FIGs. 2 and 3A, the front keypad 32 may include a search key, and the rear keypad 12 may have a 3*4 key arrangement. Alternatively, the front keypad 32 may include a search key, and the rear keypad may have a 5x4 key arrangement. Alternatively, the front keypad 32 may have a 3x4 or 5x4 key arrangement, and the rear keypad 12 may include a search key.

As described above, in exemplary embodiments, different types of the front keypad 32 and the rear keypad 12 are arranged on the front surface and the rear surface of the mobile terminal 100. Keys are dispersed on both surfaces of the mobile terminal 100, which reduces a keypad occupation area, compared with a keypad arrangement formed only on one surface of a mobile terminal. In other words, an area available for a keypad is expanded to the rear surface of the mobile terminal 100, and thus the mobile terminal 100 has room for additional keys in a key arrangement space, thereby enabling easier addition of keys.

Such an advantage allows an effective keypad arrangement in the mobile terminal 100 having various additional functions. For example, as shown in FIGs. 2 and 3A, the front surface 31 a has the keypad 32 for performing a multimedia function, and the rear surface 31 b has the keypad 12 for performing a basic function. By separating the front keypad 32 and the rear keypad 12 and arranging the keypads 32 and 12 on both surfaces of the mobile terminal 100, a key arrangement space of the mobile terminal 100 is effectively utilized and operation of the keypads is facilitated. Further, the keypad 32 for performing a multimedia function has a relatively small number of keys, and thus the size of the corresponding display unit 33a may be increased, thereby improving user satisfaction.

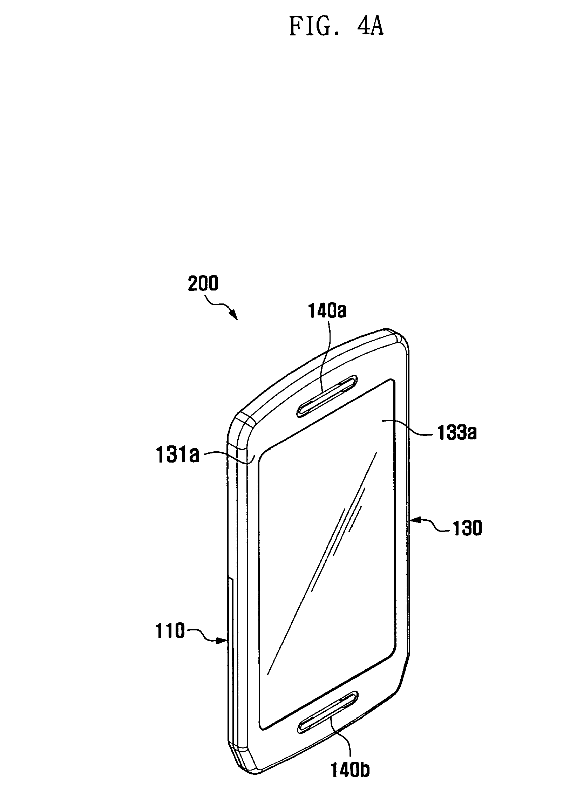

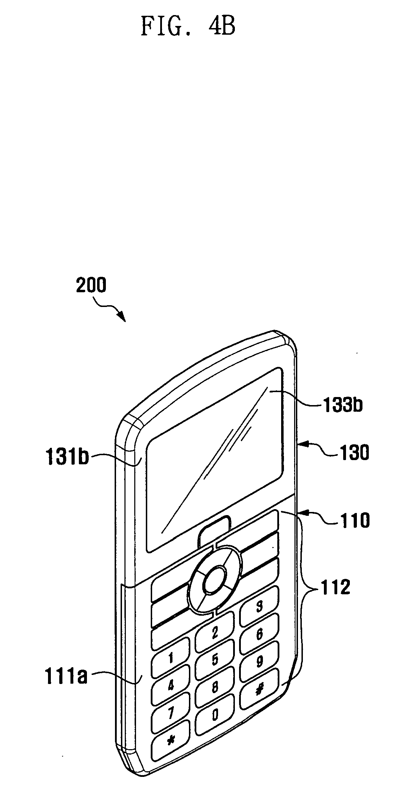

The front surface and the rear surface of the mobile terminal of the present invention may be configured in a different manner to those of the above exemplary embodiment. FIG. 4A is a perspective view illustrating a front surface 131a of a mobile terminal 200 having a keypad battery pack 110 in accordance with another exemplary embodiment of the present invention, and FIG. 4B is a perspective view illustrating a rear surface 131 b of the mobile terminal 200 having the keypad battery pack of 110 FIG. 4A.

As shown in FIG. 4A, the mobile terminal 200 of this exemplary embodiment includes a terminal body 130 having a front surface 131 a with a front display 133a. However, the front surface 131 a does not have a front keypad, compared with the above-mentioned exemplary embodiment. As shown in FIG. 4b, the terminal body 130 has a rear surface 131b with a rear display unit 133b, and a battery pack 110 is mounted on the rear surface 131 b. The battery pack 110 has an outer surface 111 a with a rear keypad 112. Because the front surface 131 a of the terminal body 130 does not have a keypad, the rear keypad 112 has a typical configuration of a 3*4 key arrangement with a search key.

As described above, the keypad 112 of the present invention may be formed only on the rear surface 131 b of the mobile terminal 200. Accordingly, the front display unit 133a may be expanded to utilize the whole front surface 131 a of the mobile terminal 200, and thus may be used as an exclusive display unit of a wide screen for receiving a digital broadcast, such as Digital Media Broadcasting (DMB). The front display 133a may be provided with a typical touch-screen function, and as shown in FIG. 4A, speakers 140a and 140b may be arranged at opposite sides of the front display unit 133a.

Referring to FIGS. 2 and 3A, a key scan control unit (not shown) for recognizing a specific key input may be formed on the terminal body 30 only or on both the terminal body 30 and the battery pack 10. When the key scan control unit is formed on the terminal body 30 only, the terminal body 30 has a first key scan control unit and a second key scan control unit electrically connected to the front keypad 32 and the rear keypad 12, respectively. When the key scan control unit is formed on both the terminal body 30 and the battery pack 10, the terminal body 30 has a first key scan control unit electrically connected to the front keypad 32 and the battery pack 10 has a second key scan control unit electrically connected to the rear keypad 12. In the former case, the second key scan control unit is formed on the terminal body 30, and thus the terminal body 30 and the battery pack 10 may require additional terminals for electrically connecting the rear key pad 12 to the second key scan control unit. In the latter case, the second key scan control unit is formed on the battery pack 10, and thus a key input signal recognized by the key scan control unit may be transmitted to the terminal body 30 through a typical serial communication terminal.

In particular, the mobile terminal 100 of the present invention may use different types of keypad battery packs. Referring to FIGs. 1A and 1B, the keypad battery packs 10 and 20 may be identical in battery type, overall shape and size, but may differ in type of the keypads 12 and 22. Accordingly, the mobile terminal 100 of the present invention may selectively mount the battery packs 10 and 20 having different types of keypads and use keys according to purpose.

Hereinafter, a method for changing a keypad of a mobile terminal by replacing a keypad battery pack with a different keypad battery pack is described in detail through exemplary embodiments.

Hereinafter, the keypad battery pack 10 shown in FIG. 1 B is referred to as a first battery pack, and the keypad battery pack 20 shown in FIG. 1 B is referred to as a second battery pack. Further, the keypad 32 of the terminal body 30 shown in FIG. 2 is referred to as a front keypad, the keypad 12 of the first battery pack 10 as a first keypad, and the keypad 22 of the second battery pack 20 as a second keypad.

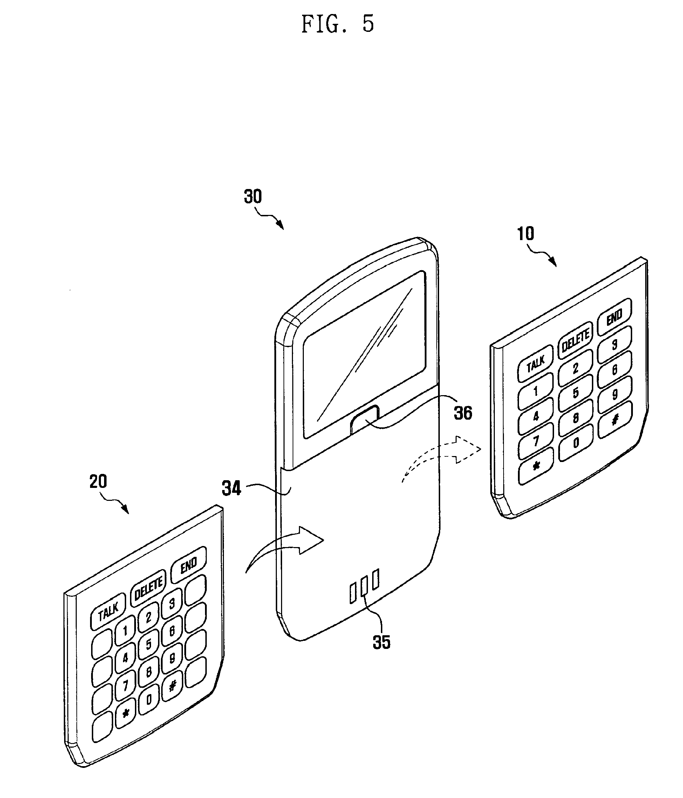

FIG. 5 is a perspective view illustrating a method for changing a keypad of a mobile terminal by replacing a battery pack with a different battery pack in accordance with another exemplary embodiment of the present invention.

Referring to FIGs. 2 and 5, when the first battery pack 10 and the second battery pack 20 are alternately mounted on the mobile terminal 100, the front keypad 32, the first keypad 12 and the second keypad 22 are different in types. For example, as shown in the drawings, the front keypad 32 includes a search key, the first keypad 12 has a 3x4 key arrangement, and the second keypad 22 has a 5x4 key arrangement.

When the first battery pack 10 mounted on the mobile terminal 100 is replaced with the second battery pack 20, the first battery pack 10 is first removed from the battery mounting area 34. When the push button 36 of the terminal body 30 is pressed, the push button 36 fastened in the sill 16 of the first battery pack 10 is released to separate the first battery pack 10 from the battery mounting area 34.

Next, the second battery pack 20 is mounted on the battery mounting area 34. When the second battery pack 20 is mounted such that a sill (not shown) of the second battery pack 20 is aligned with the push button 36, the second battery pack 20 is coupled to the terminal body 30. At the same time, a battery terminal (not shown) of the second battery pack 20 and the charging terminal 35 of the terminal body 30 are electrically connected to each other by contact.

A coupling method of the terminal body 30 and the battery pack 20 includes a sliding method or an insertion method, and the present invention is not limited in this regard.

Although the present invention uses three types of keypads 32, 12 and 22, the key scan control unit may be formed in two methods as described above. When the first key scan control unit and the second key scan control unit are both formed on the terminal body 30, a key input of the front keypad 32 is recognized by the first key scan control unit, and a key input of the first keypad 12 or of the second keypad 22, according to which keypad is mounted on the terminal body 30, is recognized by the second key scan control unit. When only the first key scan control unit is formed on the terminal body 30, a key input of the front keypad 32 is recognized by the first key scan control unit, the first battery pack 10 has a second key scan control unit for recognizing a key input of the first keypad 12, and the second battery pack 20 has a third key scan control unit for recognizing a key input of the second keypad 22.

The above-mentioned method of the present invention may be applied to a mobile terminal in which a front surface has a front display unit but no a front keypad.

FIG. 6 is a block diagram illustrating an internal configuration of a mobile terminal in accordance with another exemplary embodiment of the present invention. Referring to FIG. 6, as previously described, the mobile terminal 100 includes the terminal body 30 and the battery pack 10.

The terminal body 30 includes a front keypad 32, a front display unit 33a, a rear display unit 33b, a charging terminal 35, a wireless communication unit 37, a control unit 38 having a first key scan control unit 38a, and a memory unit 39. The battery pack 10 includes a rear keypad 12, a battery terminal 15, a battery 17, and a second key scan control unit 18. Alternatively, the mobile terminal 100 may have only the rear keypad 12 without the front keypad 32.

The front keypad 32 and the rear keypad 12 receive an operation signal of a user for controlling operation of the mobile terminal 100. The front keypad 32 outputs an input signal to the first key scan control unit 38a, and the rear keypad 12 outputs an input signal to the second key scan control unit 18. For example, the front keypad 32 performs a multimedia function, and the rear keypad 12 performs a basic function.

The first key scan control unit 38a recognizes a specific key input of the front keypad 32, and the second key scan control unit 18 recognizes a specific key input of the rear key pad 12. In other words, each of the key scan control units 38a and 18 receives an input signal from the corresponding keypads 32 and 12 and recognizes which key is pressed. In particular, the second key scan control unit 18 recognizes a key input signal, and then outputs the signal to the control unit 38 through the battery terminal 15 and the charging terminal 35. Alternatively, the second key scan control unit 18 may be formed on the terminal body 30 instead of on the battery pack 10.

The control unit 38 controls the whole operation of the mobile terminal 100. In particular, the control unit 38 receives a key input signal from the key scan control units 38a and 18, and controls a corresponding operation.

The front display unit 33a and the rear display unit 33b display various information related to operation of the mobile terminal 100. The front and rear display units 33a and 33b may include LCDs, and their screens may have equal or different size and resolution. For example, when the front keypad 32 consists of only a search key and a function key for performing a multimedia function, a screen size of the front display unit 33a formed on the same surface as the front keypad 32 may be larger than that of the rear display unit 33b. In particular, when the mobile terminal does not have a front keypad, the front display unit 33a may have a size corresponding to that of an entire front surface of the terminal body 30.

The wireless communication unit 37 performs a communication function, i.e. a basic function of the mobile terminal 100. The memory unit 39 stores various programs and data necessary for operation of the mobile terminal 100.

The battery 17 supplies power necessary for operation of the mobile terminal 100, and may be a typical Lithium-ion battery cell.

The charging terminal 35 and the battery terminal 15 are electrically connected to each other by contact. Each of the charging terminal 35 and the battery terminal 15 has positive/negative terminals for power supply and may further have a serial communication terminal for transmitting a key input signal. Alternatively, when the second key scan control unit 18 is formed on the terminal body 30, each of the charging terminal 35 and the battery terminal 15 may further have terminals for transmitting a key scan signal.

As described above, the present invention forms a keypad on a rear surface as well as on a front surface of a mobile terminal, thereby expanding a keypad-placement area to the rear surface of the mobile terminal. Accordingly, keys are arranged on both surfaces of the mobile terminal, and thus the mobile terminal has room for additional keys in a key arrangement space, thereby enabling easer addition of keys.

Further, when keypads are arranged on both surfaces of the mobile terminal, the present invention may effectively disperse the keypads according to function. For example, the present invention may separate a keypad for performing a basic function from a keypad for performing a multimedia function. This may enable effective space utilization and an easy operation of the keypad, thereby improving the convenience of a user. A display unit formed on the same surface as a keypad for performing a multimedia function may thus be expanded, thereby improving the satisfaction of a user. Accordingly, the present invention may provide a keypad structure suitable for a mobile terminal having an additional function such as a multimedia function.

Further, the present invention may form a typical keypad and display unit on only a rear surface of a mobile terminal, on which a battery pack is mounted, and form another display unit on the entire front surface of the mobile terminal. Thus, the present invention may provide a structure of a mobile terminal suitable for an exclusive display unit having a wider screen for receiving a digital broadcast.

Further, the mobile terminal of the present invention may selectively mount a plurality of battery packs having different keypad types and arrangements. Thus, the present invention may replace a keypad with a more suitable keypad according to purpose.

Although exemplary embodiments of the present invention have been described in detail hereinabove, it should be understood that many variations and modifications of the basic inventive concept herein described, which may appear to those skilled in the art, will still fall within the spirit and scope of the exemplary embodiments of the present invention as defined in the appended claims.

## Claims

1. A keypad battery pack having a first surface and a second surface and including a battery therein, the keypad battery pack comprising:
a keypad formed on the first surface; and
a battery terminal formed on the second surface.

2. The keypad battery pack of claim 1, wherein the keypad has a 3x4 key arrangement.

3. The keypad battery pack of claim 1, wherein the keypad has a 5x4 key arrangement.

4. The keypad battery pack of claim 1, wherein the keypad includes a search key.

5. The keypad battery pack of claim 1, further comprising a key scan control unit electrically connected to the keypad and the battery terminal for recognizing a specific key input of the keypad.

6. A mobile terminal comprising:
a terminal body having a front surface and a rear surface, a front display unit formed on the front surface, and a rear display unit and a battery mounting area formed on the rear surface; and
a battery pack having an inner surface contacted with the rear surface of the terminal body and an outer surface facing the same direction as the rear surface of the terminal body, and having a rear keypad formed on the outer surface, wherein the battery pack is mounted on the battery mounting area of the terminal body to be electrically connected to the terminal body.

7. The mobile terminal of claim 6, wherein the terminal body further comprises a front keypad formed on the front surface.

8. The mobile terminal of claim 6, wherein the terminal body further comprises a charging terminal formed on the battery mounting area, the battery pack further comprises a battery terminal formed on the inner surface, and the charging terminal and the battery terminal are electrically connected to each other by contact.

9. The mobile terminal of claim 7, wherein a type of the front keypad is different from a type of the rear keypad.

10. The mobile terminal of claim 7, wherein at least one of the front keypad and the rear keypad has one of a 3x4 key arrangement and a 5x4 key arrangement.

11. The mobile terminal of claim 7, wherein at least one of the front keypad and the rear keypad includes a search key.

12. The mobile terminal of claim 7, wherein the terminal body further comprises a first key scan control unit electrically connected to the front keypad for recognizing a specific key input.

13. The mobile terminal of claim 12, wherein the terminal body further comprises a second key scan control unit electrically connected to the rear keypad for recognizing a specific key input.

14. The mobile terminal of claim 12, wherein the battery pack further comprises a second key scan control unit electrically connected to the rear keypad for recognizing a specific key input.

15. The mobile terminal of claim 8, wherein the charging terminal and the battery terminal each have a serial communication terminal.

16. The mobile terminal of claim 6, wherein a size of the front display unit is larger than a size of the rear display unit.

17. The mobile terminal of claim 6, wherein the front display unit is formed over an entire front surface of the terminal body.

18. A mobile terminal comprising:
a terminal body having a front surface and a rear surface, a front display unit formed on the front surface, and a rear display unit and a battery mounting area formed on the rear surface;
a first battery pack having an inner surface and an outer surface, mounted on the battery mounting area of the terminal body such that the inner surface is contacted with the rear surface of the terminal body to be electrically connected to the terminal body, and having a first keypad formed on the outer surface facing the same direction as the rear surface of the terminal body; and
a second battery pack having an inner surface and an outer surface, and having a second keypad formed on the outer surface that is of a different type from a type of the first keypad.

19. The mobile terminal of claim 18, wherein the terminal body further comprises a front keypad formed on the front surface.

20. The mobile terminal of claim 18, wherein the terminal body further comprises a charging terminal formed on the battery mounting area, and each of the first and second battery packs further comprises a battery terminal formed on the respective inner surfaces thereof to be electrically connected to the charging terminal.

21. The mobile terminal of claim 19, wherein a type of the front keypad is different from a type of the first keypad and a type of the second keypad.

22. The mobile terminal of claim 19, wherein the front keypad includes a search key, and one of the first keypad and the second keypad has a 3x4 key arrangement and another has a 5x4 key arrangement.

23. The mobile terminal of claim 18, wherein the first keypad and the second keypad each include a search key, and one of the first keypad and the second keypad has a 3x4 key arrangement and the other has a 5x4 key arrangement.

24. The mobile terminal of claim 19, wherein the terminal body further comprises a first key scan control unit electrically connected to the front keypad for recognizing a specific key input.

25. The mobile terminal of claim 24, wherein the terminal body further comprises a second key scan control unit electrically connected to the first keypad or to the second keypad for recognizing a specific key input.

26. The mobile terminal of claim 24, wherein the first battery pack further comprises a second key scan control unit electrically connected to the first keypad for recognizing a specific key input, and the second battery pack further comprises a third key scan control unit electrically connected to the second keypad for a specific key input.

27. The mobile terminal of claim 20, wherein the charging terminal and the battery terminal each have a serial communication terminal.

28. The mobile terminal of claim 18, wherein a size of the front display unit is larger than a size of the rear display unit.

29. The mobile terminal of claim 18, wherein the front display unit is formed over an entire front surface of the terminal body.

30. A method for changing a keypad of a mobile terminal, the mobile terminal having a terminal body having a front surface with a front display unit and a rear surface with a rear display unit and battery mounting area, a first battery pack mounted on the battery mounting area and having an outer surface with a first keypad, and a second battery pack having an outer surface with a second keypad that is of a different type from a type of the first keypad, the method comprising:
removing the first battery pack from the battery mounting area; and
mounting the second battery pack on the battery mounting area.
